**Europäisches Patentamt**

**European Patent Office**

**Office européen des brevets**

(19)

(11) Veröffentlichungsnummer : **0 299 917 B1**

(12)

# EUROPÄISCHE PATENTSCHRIFT

(45) Veröffentlichungstag der Patentschrift :
**20.05.92 Patentblatt 92/21**

(51) Int. Cl.$^5$ : **C09K 3/12**

(21) Anmeldenummer : **88810274.6**

(22) Anmeldetag : **27.04.88**

(54) **Abdichtverfahren.**

(30) Priorität : **13.07.87 DE 3723088**

(43) Veröffentlichungstag der Anmeldung :
**18.01.89 Patentblatt 89/03**

(45) Bekanntmachung des Hinweises auf die
Patenterteilung :
**20.05.92 Patentblatt 92/21**

(84) Benannte Vertragsstaaten :
**CH DE FR GB IT LI**

(56) Entgegenhaltungen :
**AT-B- 320 105**
**US-A- 4 331 722**

(73) Patentinhaber : **HILTI Aktiengesellschaft**
**FL-9494 Schaan (LI)**

(72) Erfinder : **Schmidt, Arno, P.O., Dr.**
**Fechenwiesen 24**
**W-7101 Abstatt (DE)**

(74) Vertreter : **Wildi, Roland**
**Hilti Aktiengesellschaft Patentabteilung**
**FL-9494 Schaan (LI)**

EP 0 299 917 B1

**Beschreibung**

Die Erfindung betrifft ein Verfahren zum Abdichten von fliessfähige Massen enthaltenden, verschliessbaren Behältern unter Bildung einer Dichtschicht im abdichtungsbedürftigen Bereich durch Aufbringen eines die Abdichtung bewirkenden Mittels.

Die Lagerung, der Transport und auch die kundenseitige Vorratshaltung von fliessfähigen, noch reaktionsfähigen, zB gegenüber Luft empfindlichen Massen bietet im allgemeinen keine Schwierigkeiten, wenn die fliessfähige Masse in völlig geschlossenen Behältnissen enthalten ist, die nur unter zumindest teilweiser Zerstörung geöffnet werden können. Regelmässig ist dann aber der Verbraucher gehalten, nach einer derartigen Oeffnung des Behältnisses die Masse in einem Zug zu verbrauchen.

Weniger befriedigend sind allerdings die bei weitem häufigsten Fälle, bei denen wegen des regelmässig zu erwartenden Teilverbrauchs der fliessfähigen Masse die Behälter gut verschliessbar sein sollten, wenn ein Unbrauchbarwerden vermieden werden soll. Da es sich hierbei meist um Behältnisse des Massenkonsums handelt, wie für adhäsive Massen, Farben und dergleichen, können schon aus Kostengründen an die Verschlussdichtheit nicht die gleichen Anforderungen gestellt werden, wie dies beispielsweise bei Präzisionsgeräten möglich ist.

Ein besonders charakteristischer Fall sind die im technischen Bereich in grossem Umfang benutzten Kartuschen, die zB adhäsive Materialien, wie Mörtelmassen, Katalysatoren und dergleichen, enthalten, wobei in den meist hohlzylindrischen Körper der Kartuschen stempelartig ein gleichzeitig Verschlussfunktion aufweisender Kolben eintaucht. Diese Kartuschen dienen geradezu bestimmungsgemäss einem nur Teilverbrauch der darin enthaltenden Massen, wozu der Kolben in der Kartusche vorangetrieben wird und die entsprechende Menge der fliessfähigen Masse durch einen meist tüllenartigen Austritt auf der entgegengesetzten Stirnseite der Kartusche der Verwendungsstelle zugeführt wird.

Der Kolben dieser bekannten Kartuschen hat aus fertigungstechnischen Gründen innerhalb der Kartusche ein gewisses Spiel und muss auch ein gewisses Spiel haben, um den Reibwiderstand nicht zu gross werden zu lassen.

Die Folge davon ist, dass zu den fliessfähigen, viskosen Massen Luft durch den Spalt zwischen Kolben und Innenwandung der Kartusche eintreten kann, was schliesslich zur Unbrauchbarkeit des Kartuscheninhalts führt. Ausserdem kann durch diesen Spalt Masse nach aussen fliessen.

Der Versuch, diesen Nachteilen durch Dichtlippen am Kolben abzuhelfen, hat zu keinem befriedigenden Ergebnis geführt. Entweder sind aus Gründen der Fertigungstoleranzen oder wegen Alterungserscheinungen des Kunststoffs, wie Schrumpfung und Versprödung, die Dichtwirkungen unbefriedigend, oder aber die Reibwiderstände sind aus verarbeitungstechnischer Sicht unzumutbar.

Die aus der AT-B-320 105 und der US-A-4 331 722 bekannten Abdichtmethoden können im vorliegenden Falle ebenfalls keine Abhilfe schaffen. Die aus diesen Veröffentlichungen bekannten Methoden sind für grössere Systeme wie Rohrleitungen, geschlossene Behälter, Tanks und dgl. geschaffen. Insbesondere muss es sich um Systeme handeln, die einem grösseren Druck standhalten, da unter Druck reagierende Komponenten in die Systeme eingebracht werden, deren Reaktionsprodukt unter dem vorhandenen Druck für eine entsprechende Abdichtung sorgt.

Es ist demnach Aufgabe der vorliegenden Erfindung, diese technischen Probleme in einfacher und wirkungsvoller Weise zu überwinden und gleichzeitig weitere Vorteile zu erzielen.

Gemäss Erfindung wird diese Aufgabe gelöst durch ein Verfahren bei dem das aufgebrachte Mittel und die fliessfähige Masse in Kontakt gebracht werden und dabei eine die Dichtschicht bildende chemische Reaktion stattfindet.

Zumindest in jenen Bereichen, in denen also mangelnde Dichtheit zu erwarten ist, zB bei Kartuschen im Spaltbereich zwischen Kolben und Innenwandung, ist ein Mittel aufzubringen, das mit der in der Kartusche enthaltenen fliessfähigen Masse die Bildung einer Abdichtschicht bewirkt. Eine solche Abdichtung kann beispielsweise auch dadurch bewirkt werden, dass das aufgebrachte Mittel zB katalytisch die fliessfähige Masse im Kontaktbereich zur Bildung eines Abdichtfilms veranlasst, ohne in das so gebildete Filmmaterial selbst einzugehen. Ebensogut kann aber das aufgebrachte Mittel auch eine Reaktionskomponente enthalten oder daraus bestehen, die im Zusammenwirken mit einer Reaktionskomponente der fliessfähigen Masse im Kontaktbereich die Versiegelung bewirkt.

Demgemäss besteht eine bevorzugte Ausführung der Erfindung darin, dass die fliessfähige Masse eine polymere, härtbare Masse ist und das aufgebrachte Mittel einen die Härtung bzw Polymerisation der fliessfähigen Masse im Kontaktbereich bewirkenden Bestandteil, vorzugsweise einen Reaktionspartner und/oder Härtungskatalysator, enthält. Dabei ist der Begriff der Polymerisationsfähigkeit im weitesten Sinne auszulegen. Es kann sich hierbei zB sowohl um Polyadditionsreaktionen als auch um Polykondensationsreaktionen handeln. Sinngemäss das Gleiche gilt für den Begriff der Härtbarkeit. Dabei ist der Begriff der Härtung nicht auf den

2

Begriff des Duromeren beschränkt zu verstehen, sondern beinhaltet jegliche, den erstrebten Dichteffekt bewirkende, Verfestigung im Kontaktbereich.

Der gebildete Abdichtfilm wird zwar, beispielsweise bei Oeffnung des Behältnisses bzw beim Vorschub eines Kolbens in einer Kartusche, zunächst zu einer Erhöhung des Anfangswiderstands führen, welcher jedoch leicht zu überwinden ist, da andererseits die fliessfähige Masse, im Gegensatz zu früher, keine Verfestigung und damit auch keine Verfestigung und damit auch keine Erhöhung der Viskosität erfahren hat.

Gemäss einer weiteren Ausführungsform ist das aufgebrachte Mittel härtbar bzw polymerisierbar und die fliessfähige Masse enthält einen diese Härtung bewirkenden Bestandteil, vorzugsweise einen Reaktionspartner und/oder einen entsprechenden Katalysator.

Als vorteilhaft hat es sich ganz allgemein erwiesen, dass das aufgebrachte Mittel eine geringere Viskosität als die fliessfähige Masse aufweist. Meist ist die fliessfähige Masse eine hochviskose Masse, die gegebenenfalls auch in Lösung, zB einem reaktiven Lösungsmittel, einen polymerisationsfähigen, härtbaren Bestandteil enthält.

Beispiele für fliessfähige Massen sind Zubereitungen aus Epoxy-, Polyisocyanat- oder polymerisationsfähigen ungesättigten Polyester- oder Acrylverbindungen.

Das aufzubringende Mittel ist jeweils die harzbildende Komplementärverbindung zu den oben erwähnten Verbindungen oder aber Härter, die einen radikalischen oder ionischen Polymerisationsmechanismus in Gang setzen. Grundsätzlich kommen aber alle irgendwie gearteten Zweikomponenten-Formulierungen für die erfindungsgemässe Ausführung in Frage.

Bei Epoxiden als fliessfähigen Massen kann das aufzubringende Mittel zB Polyamine, Polyamide, Polyaminoamide, Säureanhydride usw enthalten. Die in den aufzubringenden Mitteln befindlichen Reaktionskomponenten können durch Zusatz von konsistenzgebenden, die mechanischen Werte des Reaktionsprodukts beeinflussenden nieder- oder hochmolekularen Substanzen auf die für den jeweiligen Anwendungsfall gewünschte Konzentration verdünnt sein.

Bei Polyisocyanaten als fliessfähige Massen werden die aufzubringenden Mittel bevorzugt Polyamine, Polyamide, Polyalkohole, Polyester- oder Polyätheralkoholate und andere bekannte Reaktionskomponenten für Polyisocyanate enthalten.

Im Falle von Polyadditions- und Polykondensationsharzen als fliessfähige Massen ist die Verwendung der jeweiligen anderen Reaktionskomponente als aufzubringendes Mittel angezeigt. Zur Beeinflussung der Weichheit oder Zugfestigkeit der Dichtschicht können eventuell nieder- oder hochmolekulare Substanzen zugesetzt werden.

Bei Polymerisationsharzen als fliessfähige Massen wird zB die Wirkung des Härters als aufzubringendes Mittel durch Verdünnung mit anderen Reaktionskomponenten konzentrationsmässig so eingestellt, dass nach Entstehen der abdichtenden Schicht das Fortschreiten der Polymerisationsreaktion verhindert wird.

Es ist dafür zu sorgen, dass alle sich durch das aufzubringende Mittel gebildeten Radikale nach einer gewissen Zeit verbraucht bzw abgefangen sind.

Beispiele:

Eine bevorzugte Verwendung des erfindungsgemäss vorgeschlagenen Verfahrens findet bei Mehrkomponenten-Klebstoffen statt. Dabei ist in aller Regel in einer Kartusche der Härter und in einer weiteren Kartusche das Harz angeordnet. Beide Komponenten werden im Sinne der Erfindung als fliessfähige Massen verstanden.

Das in der einen Kartusche enthaltene Harz kann bestehen aus:

50 Gew.-Teile Polyesterharz
50 Gew.-Teile Epoxidharz

Der in der anderen Kartusche enthaltene Härter kann bestehen aus:

30 Gew.-Teilen Celluloseacetobutyrat
20 Gew.-Teilen Peroxid
50 Gew.-Teilen Füllstoff

Das die Dichtschicht bildenden Mittel für das Harz kann aus dem Härter entsprechend vorgenannter Mischung bestehen.

Beim Härter bietet sich die Möglichkeit als Mittel für die Dichtschicht das Harz entsprechend vorgenannter Mischung zu verwenden oder folgendes Mittel aufzubringen:

25 Gew.-Teile ungesättigtes Polyesterharz
15 Gew.-Teile Polyvinylacetat-Harz-Copolymer
10 Gew.-Teile Vinylchlorid-Vinylisobutyläther
2 Gew.-Teile 10 % Praffinlösung in Styrol

in 48 Gew.-Teilen Methylmethacrylat.

Bei einem weiteren, beispielsweise aus einer Mischung von

65 Gew.-Teilen Epoxydharz und

35 Gew.-Teilen Polyesterharz

bestehenden Harz kann eine Mischung von

60 Gew.-Teilen Polyaminoamid und

40 Gew.-Teilen Formamid

als Mittel zur Bildung der Dichtschicht aufgebracht werden.

## Patentansprüche

1. Verfahren zum Abdichten von fliessfähige Massen enthaltenden, verschliessbaren Behältern unter Bildung einer Dichtschicht im abdichtungsbedürftigen Bereich durch Aufbringen eines die Abdichtung bewirkenden Mittels, **dadurch gekennzeichnet**, dass das aufgebrachte Mittel und die fliessfähige Masse in Kontakt miteinander gebracht werden und dadurch unter chemischer Reaktion die Dichtschicht gebildet wird.

2. Verfahren gemäss Patentanspruch 1, dadurch gekennzeichnet, dass die fliessfähige Masse eine polymerisationsfähige, härtbare Masse ist und das aufgebrachte Mittel einen diese Härtung bewirkenden Bestandteil, vorzugsweise Reaktionspartner und/oder Härtungskatalysator, enthält.

3. Verfahren gemäss Patentanspruch 1, dadurch gekennzeichnet, dass das aufgebrachte Mittel härtbar ist und die fliessfähige Masse einen diese Härtung bewirkenden Bestandteil, vorzugsweise Reaktionspartner und/oder Härtungskatalysator enthält.

4. Verfahren gemäss einem der Patentansprüche 1 bis 3, dadurch gekennzeichnet, dass das aufgebrachte Mittel eine geringere Viskosität als die fliessfähige Masse aufweist.

5. Verfahren gemäss einem der vorhergehenden Patentansprüche, dadurch gekennzeichnet, dass die fliessfähige Masse hochviskos ist.

## Claims

1. Method of sealing closeable containers containing fluid masses whilst forming, in the area requiring a seal, a sealing layer by application of sealing means, characterised in that the applied means and the fluid mass are brought into contact with each other, and that a sealing layer is thus formed by chemical reaction.

2. Method according to patent claim 1, characterised in that the fluid mass is a polymerisable, hardening mass, and that the applied means contains a substance which effects the hardening, preferably a reactive partner and/or hardening catalyser.

3. Method according to patent claim 1, characterised in that the applied means can be hardened, and that the fluid mass contains a substance which effects the hardening, preferably a reactive partner and/or hardening catalyser.

4. Method according to one of the patent claims 1 to 3, characterised in that the applied means is of lower viscosity than the fluid mass.

5. Method according to one of the above patent claims, characterised in that the fluid mass is highly viscous.

## Revendications

1. Procédé d'étanchéification de réservoirs obturables contenant des matières coulantes, avec formation d'une couche d'étanchéité dans la région nécessitant l'étanchement, par application d'un produit d'étanchéification, **caractérisé en ce** que le produit appliqué et la masse coulante sont mis en contact l'un avec l'autre et que la couche d'étanchéité est ainsi formée par réaction chimique.

2. Procédé selon la revendication 1, caractérisé en ce que la matière coulante est une masse durcissable capable de polymérisation et que le produit appliqué contient un composant provoquant ce durcissement, de préférence un partenaire réactionnel et/ou un catalyseur de durcissement.

3. Procédé selon la revendication 1, caractérisé en ce que le produit appliqué est durcissable et que la matière coulante contient un composant provoquant ce durcissement, de préférence un partenaire réactionnel et/ou un catalyseur de durcissement.

4. Procédé selon l'une des revendications 1 à 3, caractérisé en ce que le produit appliqué présente une viscosité plus faible que la matière coulante.

5. Procédé selon l'une des revendications précédentes, caractérisé en ce que la matière coulante est très visqueuse.